# FASCICULE DE BREVET EUROPEEN

(11) **EP 1 308 114 B1**
(45) Date de publication et mention de la délivrance du brevet: **29.11.2006**
(21) Numéro de dépôt: 02356213.5
(22) Date de dépôt: 28.10.2002
(51) Int. Cl.: A47J 27/04

(54) **Cuiseur vapeur multifonctions à autonomie améliorée**
Multifunktionelles Dampfkochgerät mit verbesserter Autonomie
Multifunctional steam-cooker with improved autonomy

(30) Priorité: 06.11.2001 FR 0114345
(43) Date de publication de la demande: 07.05.2003
(73) Titulaire: SEB S.A., 69130 Ecully (FR)
(72) Inventeur: Rossi, Fabrice, 21610 Fontaine Française (FR)
(74) Mandataire: Kiehl, Hubert

(56) Documents cités:
- DE-A- 3 304 058
- DE-C- 271 877
- FR-A- 2 786 083
- US-A- 4 485 801

## Description

La présente invention se rapporte au domaine technique général des appareils ou ustensiles de cuisson à la vapeur et concerne plus particulièrement les cuiseurs vapeur multifonctions prévus pour la cuisson sur un support perforé ainsi que dans un récipient.

Un appareil ou un ustensile de cuisson à la vapeur comporte une base prévue pour la production de vapeur alimentant une enceinte de cuisson. L'appareil de cuisson à la vapeur comporte des moyens de chauffe, par exemple électriques, alors que l'ustensile de cuisson en est dépourvu.

L'enceinte de cuisson comporte généralement un réceptacle inférieur surmonté d'un ou plusieurs récipients ou supports de cuisson, et d'un couvercle. Le réceptacle inférieur permet la collecte des jus de cuisson ou des condensats. Toutefois l'enceinte de cuisson peut comporter une paroi externe indépendante des récipients et/ou des supports de cuisson, et/ou du réceptacle collecteur.

La cuisson lente ou mijotage s'effectue à une température inférieure à 100°C mais peut durer plusieurs heures. La vapeur peut donc être utilisée pour réaliser cette cuisson. Un récipient de cuisson adapté à une telle cuisson lente présente une paroi latérale et un fond dépourvus d'ouvertures. Un couvercle fermant le récipient de cuisson permet de protéger les aliments de la vapeur. Les calories sont transmises aux aliments par l'intermédiaire des parois.

La cuisson à la vapeur des aliments secs tels que le riz s'effectue dans de l'eau et utilise un récipient de cuisson comportant un fond dépourvu d'ouvertures et une paroi latérale dont la partie inférieure est également dépourvue d'ouvertures. Il est préférable de ne pas utiliser de couvercle pour fermer le récipient de cuisson. En effet l'absence de couvercle permet à la vapeur d'être en contact avec les aliments ou le liquide pour accélérer la cuisson. Les préparations liquides telles que les sauces ou les soupes peuvent également être cuites ou réchauffées de cette manière.

La cuisson à la vapeur des autres aliments s'effectue généralement sur des supports perforés traversés par la vapeur.

Il a été proposé dans le document US 4 509 412 de réaliser un cuiseur vapeur comportant un récipient de cuisson présentant un fond bombé et des ouvertures dans la partie périphérique du fond, agencées au dessus d'un réceptacle de récupération des jus de cuisson. Cette disposition évite de troubler l'eau du réservoir d'eau agencé en position centrale dans la base de l'appareil.

Il a été proposé dans le document WO 88/07829 de réaliser un cuiseur vapeur comportant une enceinte de cuisson dont le couvercle présente une gouttière périphérique interne communiquant avec un tube de déversement débouchant au dessus du réservoir d'eau. Cette disposition permet de collecter les condensats.

On constate qu'aucun de ces appareils ne permet de concilier d'une manière simple le recyclage des condensats et la collecte séparée des jus de cuisson.

L'objet de la présente invention est de proposer un cuiseur vapeur permettant de concilier d'une manière simple le recyclage des condensats et la collecte séparée des jus de cuisson.

Un autre objet de la présente invention est de proposer un cuiseur vapeur du type précité, dans lequel l'utilisation des jus de cuisson soit facilitée.

Ces objets sont atteints avec un cuiseur vapeur comprenant un réservoir d'eau alimentant ou constituant une chambre de production de vapeur, une enceinte de cuisson, alimentée en vapeur par la chambre de production de vapeur, comportant un réceptacle collecteur intermédiaire présentant un moyen de déversement dans le réservoir d'eau, dans laquelle sont susceptibles d'être agencés un récipient de cuisson et/ou un support de cuisson présentant un moyen d'écoulement dans le réceptacle collecteur intermédiaire, du fait que le moyen de déversement est associé à un moyen d'obturation amovible.

Par récipient de cuisson, on entend un récipient présentant un fond plein et des parois latérales pleines suffisamment élevées pour éviter le débordement ou la chute d'aliments. La vapeur peut atteindre les aliments si le récipient est dépourvu de couvercle. Toutefois les jus de cuisson restent contenus dans le récipient. Le récipient peut être fermé par un couvercle pour une cuisson lente à l'étouffée de type mijotage, à une température inférieure à 100°C.

Par support de cuisson présentant un moyen d'écoulement, on entend un support présentant des ouvertures inférieures et/ou latérales, et/ou des découpes latérales prévues pour l'écoulement des jus de cuisson. La vapeur peut donc traverser le support par lesdites ouvertures ou découpes et passer autour des aliments.

Le moyen d'obturation amovible permet à l'utilisateur d'utiliser le réceptacle collecteur intermédiaire soit comme déversoir des condensats vers le réservoir d'eau, soit comme bac de récupération des jus de cuisson.

Lorsque les aliments sont placés dans un récipient de cuisson, les jus de cuisson restent confinés dans le récipient de cuisson. La vapeur se déposant contre les parois intérieures de l'enceinte de cuisson ou contre les parois extérieures du récipient de cuisson forme des condensats pouvant s'écouler le long desdites parois pour être collectés dans le réceptacle collecteur intermédiaire. Les condensats ne rentrant pas en contact avec les aliments contenus dans le récipient de cuisson, ils constituent alors une réserve d'eau réutilisable pour la cuisson sans risque de polluer la chambre de production de vapeur. Pour recycler les condensats vers le réservoir d'eau, l'utilisateur libère le moyen de déversement du réceptacle intermédiaire en retirant le moyen d'obturation. Cette disposition permet d'augmenter l'autonomie de cuisson.

Lorsque les aliments sont placés sur le support de cuisson, l'utilisateur met en place le moyen d'obturation pour boucher le moyen de déversement du réceptacle collecteur intermédiaire. Cette disposition évite que les jus de cuisson issus des aliments placés sur le support de cuisson ne troublent l'eau du réservoir. L'utilisateur peut aisément accéder aux jus de cuisson collectés dans le réceptacle collecteur intermédiaire.

L'utilisateur dispose ainsi d'un appareil polyvalent et performant.

Avantageusement, le moyen d'obturation est solidaire du réceptacle collecteur intermédiaire. Cette disposition permet d'éviter que l'utilisateur perde le moyen d'obturation. En alternative, le moyen d'obturation peut être indépendant ou encore être solidaire d'un autre élément du cuiseur vapeur.

Selon un mode de réalisation le moyen d'obturation est formé par un clapet comportant une surface d'obturation reliée à une tige engagée dans le moyen de déversement, la tige étant articulée par rapport à un levier selon un axe d'articulation décentré, le levier comportant une surface d'appui dont le rayon par rapport à l'axe d'articulation décentré est croissant entre une première zone, dans laquelle la surface d'obturation libère le moyen de déversement, et une deuxième zone, dans laquelle la surface d'appui est en contact avec une face du réceptacle collecteur intermédiaire pour maintenir la surface d'obturation contre une face opposée dudit réceptacle. Ainsi la position du levier permet de commander l'obturation ou non du moyen de déversement par le clapet.

Avantageusement alors le moyen de déversement est un orifice ménagé dans une paroi du réceptacle collecteur intermédiaire, la surface d'obturation étant un anneau, la tige étant issue de l'intérieur dudit anneau. L'orifice peut alors être ménagé dans le fond du réceptacle collecteur intermédiaire.

Avantageusement encore l'articulation entre la tige et le levier est formée par deux tenons alignés, engagés axialement dans deux cavités présentant chacune une découpe latérale permettant l'insertion en force desdits tenons. Cette disposition facile le montage.

Avantageusement alors, le levier comporte deux flasques portant chacune l'un des tenons sur leur face intérieure, la surface d'appui étant ménagée sur la périphérie des flasques. Une telle pièce peut aisément être obtenue par moulage.

Avantageusement alors, les flasques sont réunies par une languette.

L'utilisateur peut ainsi aisément manoeuvrer le levier.

Avantageusement encore, le levier est agencé sur une face intérieure du réceptacle collecteur intermédiaire. En d'autres termes, lorsque le réceptacle collecteur intermédiaire est en place sur le réservoir d'eau, l'utilisateur peut accéder au levier sans avoir besoin de retirer ledit réceptacle.

Avantageusement encore, la surface d'obturation est formée par un joint monté sur une collerette solidaire de la tige. En alternative, le joint peut notamment être monté sur le réceptacle collecteur intermédiaire.

Selon un autre mode de réalisation le moyen d'obturation est formé par un bouchon souple.

L'invention sera mieux comprise à l'étude de deux exemples de réalisation, pris à titre nullement limitatif, illustrés dans les figures annexées dans lesquelles :
- la figure 1 est une section verticale d'un cuiseur vapeur électrique selon l'invention, comportant un premier exemple de réalisation du moyen d'obturation de l'ouverture de déversement du réceptacle collecteur intermédiaire,
- les figures 2 et 3 sont deux vues en perspective des deux éléments d'un deuxième exemple de réalisation du moyen d'obturation de l'ouverture de déversement du réceptacle collecteur intermédiaire,
- les figures 4 et 5 sont deux vues frontales du deuxième exemple de réalisation, respectivement en position ouverte et en position fermée,
- les figures 6 et 7 sont deux vues latérales du deuxième exemple de réalisation, respectivement en position ouverte et en position fermée.

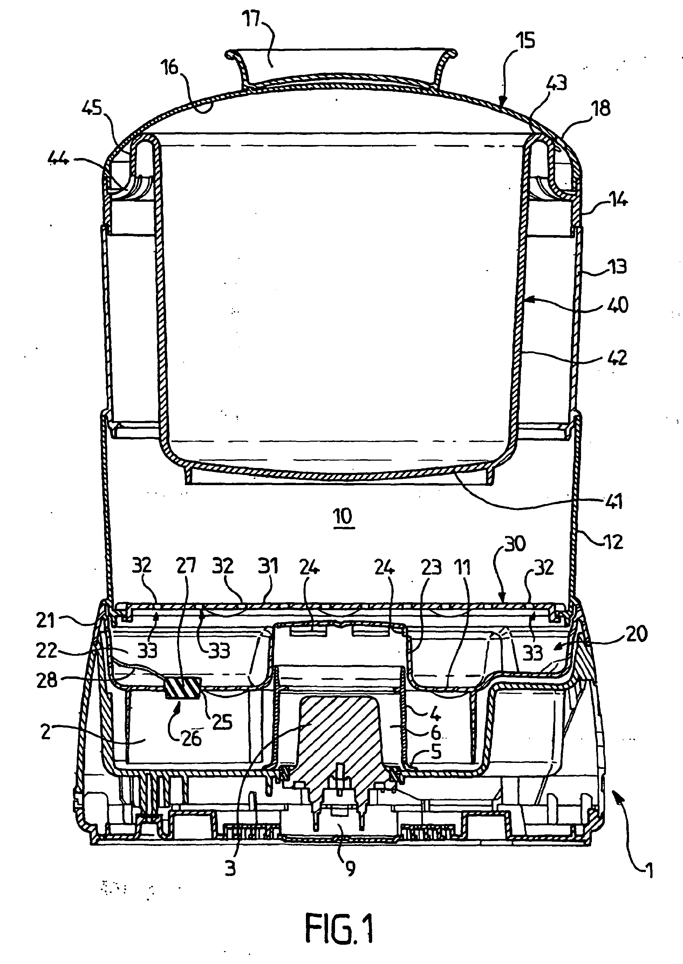

La figure 1 montre un cuiseur vapeur électrique comprenant une base 1, prévue pour la production de vapeur, comportant un réservoir d'eau 2 et un élément chauffant 3 associé à un dispositif de pilotage électronique 9 permettant un fonctionnement à pleine puissance pendant une phase initiale de montée en température et un fonctionnement à puissance réduite pendant la phase de cuisson. La puissance réduite peut être fournie en continu ou par alternance de périodes de chauffe et de périodes d'arrêt. Une paroi annulaire 4 est agencée autour de l'élément chauffant 3. La paroi 4 est munie d'un passage inférieur 5 séparant le réservoir 2 d'une chambre de production de vapeur 6.

La base 1 est surmontée d'une enceinte de cuisson 10 comportant un fond 11, des parois latérales 12, 13, 14 et un couvercle 15. Le couvercle comporte une face intérieure bombée 16, un organe de préhension 17 et un évent 18.

Un réceptacle collecteur intermédiaire 20 agencé sur la base 1 forme le fond 11 de l'enceinte de cuisson 10. Le réceptacle 20 comporte une paroi périphérique 21 supportant la paroi latérale 12. La paroi 21 entoure un bassin 22 prévu pour la collecte des jus ou des condensats. Une paroi annulaire 23 s'élève du fond du bassin 22. La paroi 23 présente des orifices 24 prévus pour le passage de la vapeur issue de la chambre 6. Le réceptacle 20 présente un moyen de déversement 25 associé à un moyen d'obturation 26 amovible. Le moyen de déversement 25 est formé par un orifice ménagé dans le fond du bassin 22.

Selon l'exemple de réalisation illustré à la figure 1, le moyen d'obturation 26 est formé par un bouchon souple 27 relié au réceptacle 20 par une attache 28. Le bouchon souple 27 est par exemple réalisé en élastomère.

Un support de cuisson 30 est monté sur un rebord interne de la paroi 12. Le support de cuisson 30 est formé par une plaque perforée 31 amovible. Les perforations 32 de la plaque 31 forment un moyen d'écoulement 33 vers le réceptacle 20 disposé sous ladite plaque.

Un récipient de cuisson 40 comporte un fond 41 et une paroi latérale 42 dépourvus de perforations jusqu'au sommet d'un rebord supérieur 43. Des ouvertures 44 ménagées dans la paroi 45 reliant le récipient 40 à la paroi périphérique de support 14 permettent à la vapeur d'atteindre la face intérieure 16 du couvercle 15, pour former des condensats. Du fait de la forme bombée de la face intérieure 16, les condensats glissent le long de ladite face pour former un joint liquide par condensation au niveau du rebord 43, du fait de la faible distance ménagée entre ledit rebord 43 et ladite face 16. La vapeur issue de la chambre de production de vapeur 6 continue ensuite à chauffer le fond 41 et la paroi latérale 42 du récipient de cuisson 40, sans pénétrer à l'intérieur dudit récipient.

Lorsque l'utilisateur veut cuire des aliments sur le support 30, des jus de cuisson peuvent s'écouler par les perforations 32 de la plaque 31. L'utilisateur doit mettre en place le bouchon 27 pour obturer le moyen de déversement 25, s'il veut que les jus de cuisson soient collectés dans le réceptacle 20. L'utilisateur peut aisément accéder aux jus de cuisson collectés dans le réceptacle 20 en retirant les autres éléments de l'enceinte de cuisson 10.

Lorsque l'utilisateur veut cuire des aliments dans le récipient 40, des condensats peuvent se former sur les parois de l'enceinte de cuisson à l'extérieur du récipient 40 et retomber dans le réceptacle collecteur 20. Pour augmenter l'autonomie de l'appareil, l'utilisateur peut retirer le bouchon 27. Les condensats collectés dans le réceptacle 20 peuvent alors retomber dans le réservoir 2 et alimenter à nouveau la chambre de production de vapeur 6.

Le recyclage des condensats peut également être envisagé lors d'une cuisson dans un récipient posé sur le support 30. En effet, les jus de cuisson restent confinés dans ledit récipient.

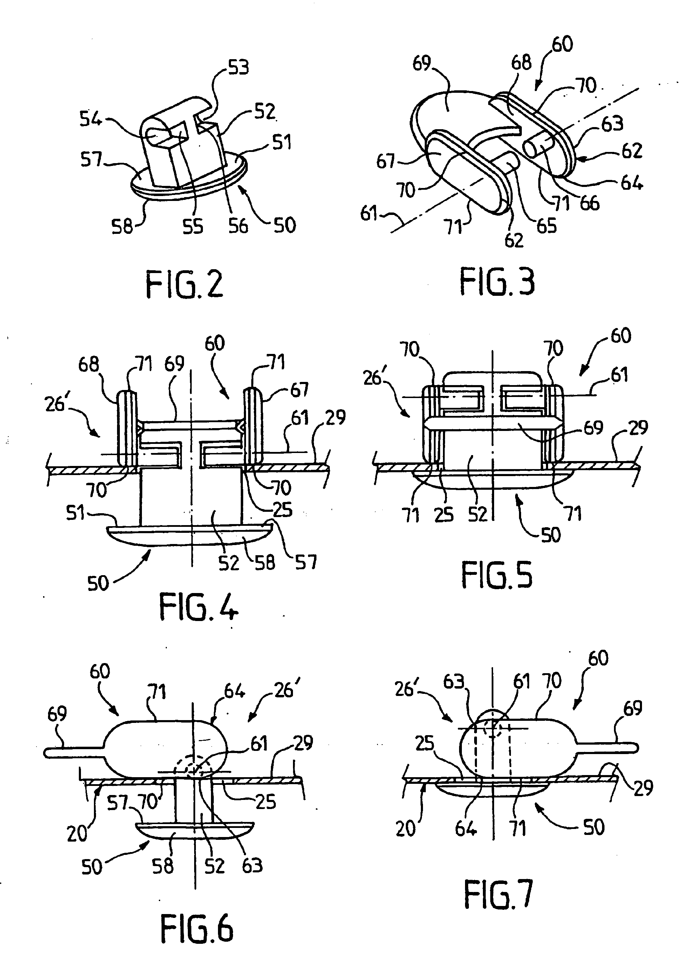

Un deuxième mode de réalisation est illustré aux figures 2 à 7, dans lequel le moyen d'obturation 26' est formé par un clapet 50 articulé par rapport à un levier 60 selon un axe d'articulation décentré 61.

Le clapet 50 comporte une surface d'obturation 51 reliée à une tige 52 articulée par rapport au levier 60. La surface d'obturation 51 est un anneau et la tige 52 est issue de l'intérieur de cet anneau. La surface d'obturation 51 est formée par un joint 57 monté sur une collerette 58 solidaire de la tige 52. La tige 52 est engagée dans un orifice formant le moyen de déversement 25, ménagé dans le fond du réceptacle 20. Deux cavités 53, 54 appartenant à l'articulation sont ménagées sur la tige 52.

Le levier 60 comporte deux flasques 67, 68 réunies par une languette 69. La face intérieure de chacune des flasques 67, 68 porte un tenon 65, 66. Les deux tenons 65, 66 sont alignés.

L'axe des tenons 65, 66 forme l'axe décentré 61 de l'articulation. Le levier 60 est agencé sur une face intérieure 29 du réceptacle 20. Le levier 60 présente une surface d'appui 62 comportant par rapport à l'axe d'articulation décentré 61 un rayon croissant entre une première zone d'appui 63 et une deuxième zone d'appui 64.

La surface d'appui 62 est prolongée de part et d'autre des zones d'appui 63, 64 d'une part par une première zone de repos 70 et d'autre part par une deuxième zone de repos 71. Tel que montré à la figure 3, les zones de repos 70, 71 sont formées par deux faces, avantageusement opposées, de la périphérie de chacune des flasques 67, 68. Sur chaque flasque la première zone de repos 70 est reliée à la deuxième zone de repos 71 par un secteur circulaire sur lequel sont ménagées les zones d'appui 63, 64.

L'articulation entre la tige 52 et le levier 60 est formée par les deux tenons 65, 66 engagés axialement dans les cavités 53, 54. Les cavités 53, 54 présentent chacune une découpe latérale 55, 56 permettant l'insertion en force des tenons 65, 66.

Tel qu'illustré aux figures 4 et 6, lorsque la première zone de repos 70 est en contact avec la face intérieure 29 du réceptacle 20, la zone d'appui 63 est située à proximité de la face 29 du réceptacle 20. La zone d'appui 63 étant rapprochée de l'axe décentré 61, la tige 52 articulée sur l'axe 51 est en position basse par rapport au moyen de déversement 25. La surface d'obturation 51 est éloignée de la face opposée du réceptacle 20 et libère l'orifice de déversement 25. Le levier 60 occupe alors une position conseillée lors d'une cuisson lente ou mijotage. Le recyclage des condensats permet d'augmenter l'autonomie de cuisson.

Tel qu'illustré aux figures 5 et 7, lorsque la deuxième zone de repos 71 est en contact avec la face intérieure 29 du réceptacle 20, la zone d'appui 64 est située à proximité de la face 29 du réceptacle 20. La zone d'appui 64 étant éloignée de l'axe décentré 61, la tige 52 articulée sur l'axe 51 est en position haute par rapport au moyen de déversement 25. La surface d'obturation 51 est maintenue contre la face opposée du réceptacle 20. L'orifice de déversement 25 est obturé. Le levier 60 occupe alors une position conseillée lors d'une cuisson vapeur. L'utilisateur récupère les jus de cuisson dans le réceptacle 20.

L'utilisateur dispose ainsi d'un cuiseur vapeur performant et commode d'emploi, permettant de réaliser plusieurs types de cuisson à la vapeur.

Pour passer de l'une à l'autre position du clapet 50, l'utilisateur manoeuvre le levier 60 au moyen de la languette 69. L'appui du levier 60 sur le réceptacle 20 est transféré de la zone de repos 70 à la zone de repos 71 en passant par les zones d'appui 63, 64, et réciproquement.

A titre de variante pour le premier exemple de réalisation, le bouchon 27 peut être réalisé dans un matériau rigide. Un joint peut alors être prévu sur le bouchon ou dans le réceptacle. L'attache 28 n'est pas indispensable.

A titre de variante pour le deuxième exemple de réalisation, le levier 60 peut être monté sur la face inférieure du réceptacle 20. Un ressort est alors nécessaire pour repousser la tige 52 afin de libérer le moyen de déversement 25. Les tenons 65, 66 peuvent être montés sur la tige 52, les logements ou cavités 53, 54 étant alors ménagées dans le levier 60. Le joint 57 peut être ménagé autour du moyen de déversement 25.

A titre de variante complémentaire, le moyen de déversement 25 n'est pas nécessairement ménagé dans le fond du réceptacle 20, mais peut être ménagé dans une paroi latérale adjacente au fond du réceptacle 20.

A titre de variante complémentaire, le récipient de cuisson 40 peut être associé à un couvercle indépendant du couvercle de l'enceinte de cuisson 10, ou être dépourvu de couvercle.

La présente invention n'est nullement limitée aux exemples de réalisation décrits et à leurs variantes, mais englobe de nombreuses modifications dans le cadre des revendications.

## Revendications

1. Cuiseur vapeur comprenant un réservoir d'eau (2) alimentant ou constituant une chambre de production de vapeur (6), une enceinte de cuisson (10), alimentée en vapeur par la chambre de production de vapeur (6), comportant un réceptacle collecteur intermédiaire (20) présentant un moyen de déversement (25) dans le réservoir d'eau (2), dans laquelle sont susceptibles d'être agencés un récipient de cuisson (40) et/ou un support de cuisson (30) présentant un moyen d'écoulement (33) dans le réceptacle collecteur intermédiaire (20), **caractérisé en ce que** le moyen de déversement (25) est associé à un moyen d'obturation (26 ; 26') amovible.

2. Cuiseur vapeur selon la revendication 1, **caractérisé en ce que** le moyen d'obturation (26 ; 26') est solidaire du réceptacle collecteur intermédiaire (20).

3. Cuiseur vapeur selon l'une des revendications 1 ou 2, **caractérisé en ce que** le moyen d'obturation (26') est formé par un clapet (50) comportant une surface d'obturation (51) reliée à une tige (52) engagée dans le moyen de déversement (25), la tige (52) étant articulée par rapport à un levier (60) selon un axe d'articulation décentré (61), le levier (60) comportant une surface d'appui (62) dont le rayon par rapport à l'axe d'articulation décentré (61) est croissant entre une première zone (63), dans laquelle la surface d'obturation (51) libère le moyen de déversement (25), et une deuxième zone (64), dans laquelle la surface d'appui (62) est en contact avec une face du réceptacle collecteur intermédiaire (20) pour maintenir la surface d'obturation (51) contre une face opposée dudit réceptacle.

4. Cuiseur vapeur selon la revendication 3, **caractérisé en ce que** le moyen de déversement (25) est un orifice ménagé dans une paroi du réceptacle collecteur intermédiaire (20), la surface d'obturation (51) étant un anneau, la tige (52) étant issue de l'intérieur dudit anneau.

5. Cuiseur vapeur selon l'une des revendications 3 ou 4, **caractérisé en ce que** l'articulation entre la tige (52) et le levier (60) est formée par deux tenons (65, 66) alignés, engagés axialement dans deux cavités (53, 54) présentant chacune une découpe latérale (55, 56) permettant l'insertion en force desdits tenons.

6. Cuiseur vapeur selon la revendication 5, **caractérisé en ce que** le levier (60) comporte deux flasques (67, 68) portant chacune l'un des tenons (65, 66) sur leur face intérieure, la surface d'appui (62) étant ménagée sur la périphérie des flasques (67, 68).

7. Cuiseur vapeur selon la revendication 6, **caractérisé en ce que** les flasques (67, 68) sont réunies par une languette (69).

8. Cuiseur vapeur selon l'une des revendications 3 à 7, **caractérisé en ce que** le levier (60) est agencé sur une face intérieure (29) du réceptacle collecteur intermédiaire (20).

9. Cuiseur vapeur selon l'une des revendications 3 à 8, **caractérisé en ce que** la surface d'obturation (51) est formée par un joint (57) monté sur une collerette (58) solidaire de la tige (52).

10. Cuiseur vapeur selon l'une des revendications 1 ou 2, **caractérisé en ce que** le moyen d'obturation (26) est formé par un bouchon souple (27).

## Claims

1. A steamer comprising a water reservoir (2) for feeding or constituting a steam production chamber (6), a cooking enclosure (10) that is supplied with steam by the steam production chamber (6) including an intermediate collection vessel (20) having drain means (25) for draining its content into the water reservoir (2) and in which there may be placed a cooking vessel (40) and/or a cooking support (30) having flow means (33) enabling flow into the intermediate collection vessel (20), which steamer is **characterized in that** the drain means (25) are associated with removable closure means (26; 26').

2. A steamer according to claim 1, **characterized in that** the closure means (26; 26') are fastened to the intermediate collection vessel (20).

3. A steamer according to claim 1 or claim 2, **characterized in that** the closure means (26') take the form of a washer (50) having a closure surface (51) and connected to a stem (52) that is engaged in the drain means (25) and is articulated to a lever (60) about an eccentric articulation axis (61), the lever (60) having a bearing surface (62) whose radius relative to the eccentric articulation axis (61) increases between a first region (63) in which the closure surface (51) opens the drain means (25) and a second region (64) in which the bearing surface (62) is in contact with a face of the intermediate collection vessel (20) to hold the closure surface (51) against a facing face of said vessel.

4. A steamer according to claim 3, **characterized in that** the drain means (25) comprise an orifice formed in a wall of the intermediate collection vessel (20), the closure surface (51) is a ring and the stem (52) extends from the inside of said ring.

5. A steamer according to claim 3 or claim 4, **characterized in that** the articulation between the stem (52) and the lever (60) is provided by two aligned journals (65, 66) engaged axially in two cavities (53, 54) each having a side cut-out (55, 56) enabling forcible insertion of said journals.

6. A steamer according to claim 5, **characterized in that** the lever (60) includes two flanges (67, 68) each carrying one of the journals (65, 66) on its inside face, the bearing surfaces (62) being formed on the edges of the flanges (67, 68).

7. A steamer according to claim 6, **characterized in that** the flanges (67, 68) are joined by a tab (69).

8. A steamer according to any one of claims 3 to 7, **characterized in that** the lever (60) is on an inside face (29) of the intermediate collection vessel (20).

9. A steamer according to any one of claims 3 to 8, **characterized in that** the closure surface (51) is formed by a gasket (57) mounted on a flange (58) fastened to the stem (52).

10. A steamer according to claim 1 or claim 2, **characterized in that** the closure means (26) are formed by a flexible plug (27).

## Patentansprüche

1. Dampfkocher mit einem Wasserbehälter (2), der eine Dampferzeugungskammer (6) speist oder bildet, einem Garraum (10), der von der Dampferzeugungskammer (6) mit Dampf gespeist wird, einen Auffangzwischenbehälter (20) mit einem Mittel zum Ausgießen (25) in den Wasserbehälter (2) aufweist und in dem ein Gargefäß (40) und/oder ein Garträger (30) angeordnet sein können, welcher ein Mittel zum Abfließen (33) in den Auffangzwischenbehälter (20) aufweist, **dadurch gekennzeichnet, dass** das Ausgießmittel (25) einem abnehmbaren Verschlussmittel (26; 26') zugeordnet ist.

2. Dampfkocher nach Anspruch 1, **dadurch gekennzeichnet, dass** das Verschlussmittel (26; 26') fest mit dem Auffangzwischenbehälter (20) verbunden ist.

3. Dampfkocher nach Anspruch 1 oder 2, **dadurch gekennzeichnet, dass** das Verschlussmittel (26') durch ein Ventilelement (50) gebildet ist, das eine Verschlussfläche (51) aufweist, die mit einem in das Ausgießmittel (25) eingreifenden Stift (52) verbunden ist, wobei der Stift (52) bezüglich eines Hebels (60) gemäß einer außermittigen Anlenkachse (61) angelenkt ist, wobei der Hebel (60) eine Anlagefläche (62) aufweist, deren Radius bezüglich der außermittigen Anlenkachse (61) zwischen einem ersten Bereich (63), in dem die Verschlussfläche (51) das Ausgießmittel (25) freigibt, und einem zweiten Bereich (64) zunimmt, in welchem die Anlagefläche (62) eine Fläche des Auffangzwischenbehälters (20) berührt, um die Verschlussfläche (51) gegen eine gegenüberliegende Fläche des Behälters zu halten.

4. Dampfkocher nach Anspruch 3, **dadurch gekennzeichnet, dass** das Ausgießmittel (25) eine in einer Wand des Auffangzwischenbehälters (20) ausgebildete Öffnung ist, wobei die Verschlussfläche (51) ein Ring ist, wobei der Stift (52) aus dem Inneren des Rings hervorgeht.

5. Dampfkocher nach Anspruch 3 oder 4, **dadurch gekennzeichnet, dass** das Gelenk zwischen dem Stift (52) und dem Hebel (60) durch zwei in einer Reihe angeordnete Zapfen (65, 66) gebildet ist, die axial in zwei Hohlräume (53, 54) eingreifen, welche jeweils einen seitlichen Ausschnitt (55, 56) aufweisen, der das Einsetzen mit Kraft der Zapfen ermöglicht.

6. Dampfkocher nach Anspruch 5, **dadurch gekennzeichnet, dass** der Hebel (60) zwei Wangen (67, 68) aufweist, die an ihrer Innenfläche jeweils einen der Zapfen (65, 66) tragen, wobei die Anlagefläche (62) am Umfang der Wangen (67, 68) ausgebildet ist.

7. Dampfkocher nach Anspruch 6, **dadurch gekennzeichnet, dass** die Wangen (67, 68) durch eine Lasche (69) verbunden sind.

8. Dampfkocher nach einem der Ansprüche 3 bis 7, **dadurch gekennzeichnet, dass** der Hebel (60) an einer Innenfläche (29) des Auffangzwischenbehälters (20) angeordnet ist.

9. Dampfkocher nach einem der Ansprüche 3 bis 8, **dadurch gekennzeichnet, dass** die Verschlussfläche (51) durch eine Dichtung (57) gebildet ist, die an einem fest mit dem Stift (52) verbundenen Kragen (58) angebracht ist.

10. Dampfkocher nach Anspruch 1 oder 2, **dadurch gekennzeichnet, dass** das Verschlussmittel (26) durch einen nachgiebigen Stopfen (27) gebildet ist.
